# EUROPEAN PATENT APPLICATION

(11) **EP 1 551 029 A2**
(43) Date of publication of application: **06.07.2005**
(21) Application number: 04257477.2
(22) Date of filing: 01.12.2004
(51) Int. Cl.: G11B 27/10, G11B 20/10

(54) **Magnetic recording/reproducing apparatus**

(30) Priority: 22.12.2003 JP 2003425356
(71) Applicant: Sony Corporation, Tokyo 141 (JP)
(72) Inventor: Watanabe, Ryuuji c/o Sony Corporation, Tokyo (JP)
(74) Representative: Robinson, Nigel Alexander Julian

(57) **Abstract**

Data-connection recording is performed with operations of a recording signal processing section 10, recording/reproducing section 20, and reproduced signal processing section 30 controlled by a controller 40. The controller 40 performs data-connection recording by switching among controls according to first to third methods depending on the operation mode immediately before a record pause mode, the first method performing data-connection recording by reproducing, in the forward direction, the last block data that should be left in the base at single speed with tracking being effected to write the last block data in a memory 50 and reading out the last block data that should be left in the base from the memory 50, the second method performing data-connection recording by reading out the last block data that should be left in the base stored in the memory 50 from the memory 50 in a record mode, and the third method performing data-connection recording by reproducing, in the forward direction, the last block data that should be left in the base at half speed or less by non-tracking system using double-density or more scan so as to write the last block data in the memory 50 and reading out the last block data that should be left in the base from the memory 50.

## Description

The present invention relates to a magnetic recording/reproducing apparatus handling digital data, and more particularly, to a magnetic recording/reproducing apparatus having data-connection recording function.

This application claims priority of Japanese Patent Application No. 2003-425356, filed on December 22, 2003, the entirety of which is incorporated by reference herein.

In a consumer digital magnetic recording/reproducing apparatus that records digital data onto a tape-like recording medium by means of a swivel head and reproduces the digital data from the recording medium by means of the swivel head, a segment recording process that divides one frame of digital data into a plurality of tracks for recording is adopted. Since a reproduced image cannot be output until information of all of the plurality of tracks corresponding to one frame has been reproduced in this process, the reproduced information is sequentially stored in a memory, and a reproduced image is output only after information corresponding to one frame has been assembled (refer to, for example, Japanese Patent No. 3125479).

In addition, as a highly effective compression process for recording image data or audio data onto a recording medium in a compressed manner, an MPEG (Moving Picture Expert Group) scheme has been known.

MPEG scheme effectively reduces data amount using three types of pictures for image data compression: intra-frame coding picture (I-picture) that is independently coded using data of a video frame only from itself, inter-frame forward direction prediction coding picture (P-picture) that is coded with reference to information of a previous frame, and bi-direction prediction coding picture (B-picture) that is coded with reference to both past and future frames.

As a reproducing method used in the consumer digital magnetic recording/reproducing apparatus, a tracking reproduction and a non-tracking reproduction have been known. The tracking reproduction performs tracking servo in the tape direction using recorded reproduction information of a track so that a reproducing head passes the center of the record track, and allows the reproducing head to scan one track just one time to obtain reproduced data. On the other hand, in order to cope with a narrow track, the non-tracking reproduction does not perform tracking servo at the time of reproduction but allows the reproducing head to scan one track data more than once, stores only proper data obtained among the scan operations in a memory, and performs reproduction at the time point when complete data has been assembled to obtain proper data.

As a digital data storage device for back-up of large amounts of computer data, a magnetic recording/reproducing apparatus that has a non-tracking reproduction function for coping with a defective track such as track bending in addition to a normal tracking reproduction function has been proposed (refer to, for example, Jpn. Pat. Appln. Laid-Open Publication No. 2003-233938).

Further, when data-connection recording is performed in tape recording by encoding digital image data in a highly effective manner, the following method has been used. That is, the last block that should be left in a base is read out, to-be-newly-recorded data is then connected to the last part of valid data in the base to create a new block, and the newly created block is written back onto a tape. This method prevents image freeze-up or sound break-off at the data-connection part from occurring frequently and prevents image quality at the start section of the recording from being degraded (refer to, for example, Jpn. Pat. Appln. Laid-Open Publication No. 2001-94940).

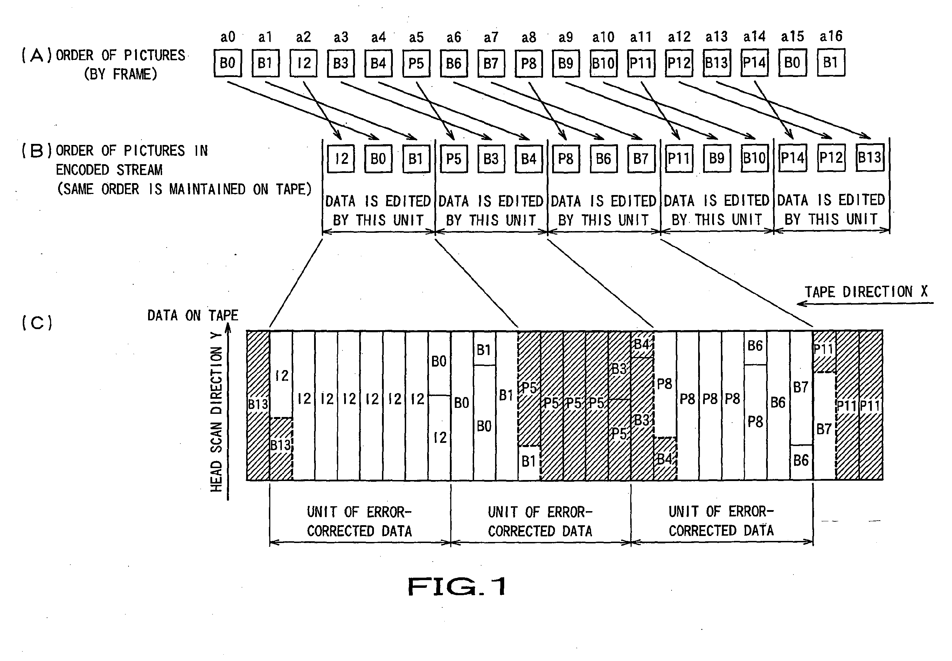

In order to prevent image freeze-up or sound break-off at the data-connection part from occurring frequently and prevent image quality at the start section of the recording from being degraded when data-connection recording is performed in MPEG tape recording, a method as shown in FIGS. 1 to 3 of the accompanying drawings is being studied. In this method, the last block that should be left in a base is read out, to-be-newly-recorded data is then connected to the last part of effective data in the base to create a new block, and the newly created block is written back onto a tape.

FIG. 1 shows a recording state before data-connection recording.

In FIG. 1, data starting from a picture a0 to picture a16 represented by the frame and ordered as shown in (A) is permuted/encoded according to MPEG standard to become a data stream (I2, B0, B1, ..., P12, P13) ordered as shown in (B). The data stream is subjected to error correcting encoding, by which inner-code (C1) parity and outer-code (C2) parity according to Reed-Solomon codes are added to the data stream, and is recorded on the tape as a state shown in (C).

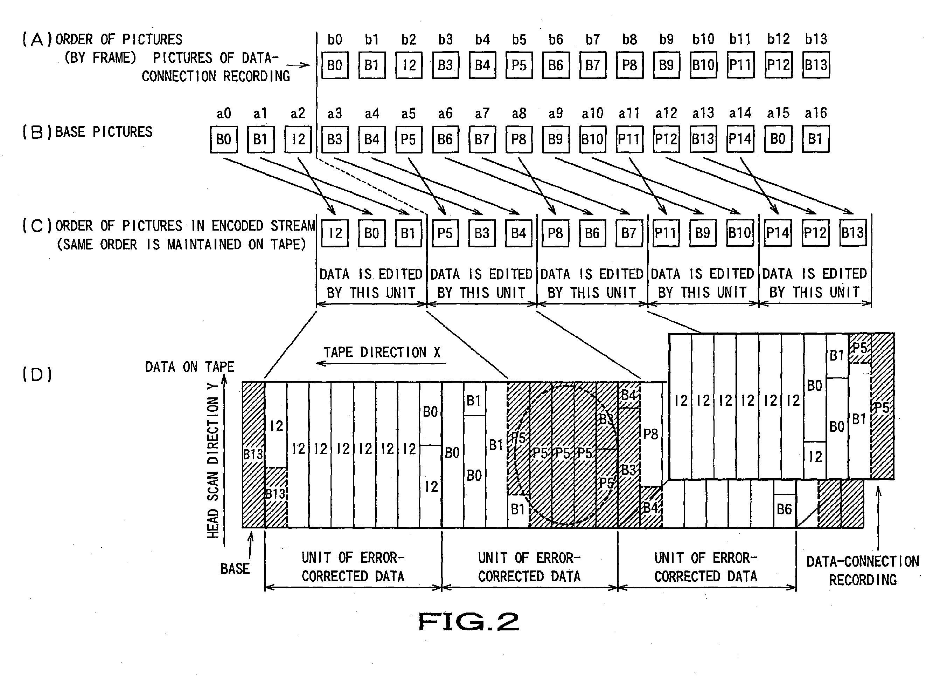

FIG. 2 shows data-connection recording in which a base is not written back, and recording is performed starting from the next error-corrected block of outer-codes.

In the data-connection recording shown in FIG. 2, data starting from a picture b0 to picture b13 represented by the frame and ordered as shown in (A) is connected to a base picture a2 shown in (B) and permuted/encoded according to MPEG standard to become a data stream (I2, B0, B1, ···, P12, P13) ordered as shown in (C). The data stream is then subjected to error correcting encoding, and is recorded on the tape as shown in (D).

In the above data-connection recording in which a base is not written back, and recording is performed starting from the next error-corrected block of outer-codes, base data immediately before the data-connection part surrounded by a dotted circle frame in (D) becomes invalid to generate a gap in the tape which allows the data-connection part to easily freeze. Since start-up delay of a second stream tends to be larger than ending delay of a first stream that precedes the second stream in general, encoding amount in the start section of data-connection recording needs to be further restricted in order to prevent occurrence of the freeze.

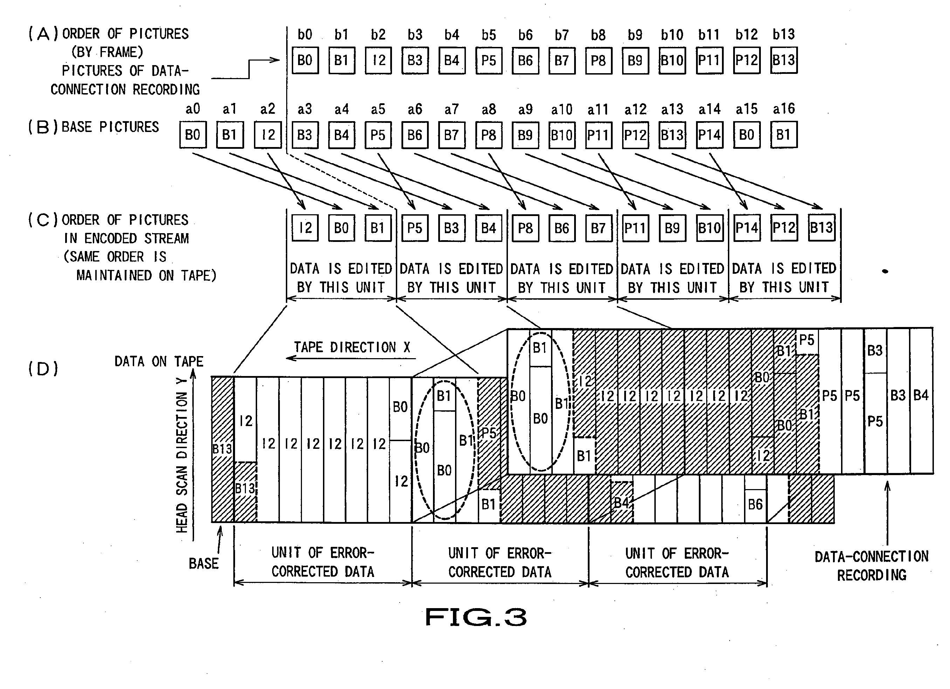

FIG. 3 shows data-connection recording in which an error-corrected block including the last data is once read out and connected to data to be additionally recorded, and the integrated data is written back.

In the data-connection recording shown in FIG. 3, data starting from a picture b0 to picture b13 represented by the frame and ordered as shown in (A) is connected to a base picture a2 shown in (B). More specifically, at that time, an error-corrected block including the last data of base data a is once read out and connected to to-be-recorded data b, and permuted/encoded according to MPEG standard to become a data stream (I2, B0, B1, ···, P12, P13) ordered as shown in (C). The data stream is then subjected to error correcting encoding, and is recorded on the tape as shown in (D).

In the case of above data-connection recording involving the write back of base data, the base data in the written back data-connection part surrounded by a dotted circle frame in FIG. 3 does not become invalid. Accordingly, little gap is generated in the tape, so that freeze-up of image hardly occurs as compared to the case of FIG. 2.

However, in a conventional consumer digital magnetic recording/reproducing apparatus that adopts the tracking reproduction, when reproduction is started from a state where tracking is not effected, such as a halt state, the time required for the tracking to be effected corresponds to up to about 200 msec to 300 msec. Therefore, when base data needs to be properly obtained in order to perform data-connection recording, it is necessary to start reproduction from a tape position rather short of the position at which a target base data exists and read the base data with the tracking being effected.

Further, tape direction is switched between forward direction and reverse direction, the mechanical position of a mechanical deck needs to be changed. Alternatively, depending on the type of the mechanical deck, when the tape direction is switched from reverse direction to forward direction, tape path is not stabilized until a little time has elapsed since the tape has been started. Therefore, extra tape running in the reverse direction is previously required. Thus, mechanical transition requires a certain amount of time.

Therefore, in view of the above problems, an object of at least preferred embodiments of the present invention is to provide a magnetic recording/reproducing apparatus capable of performing high-quality data-connecting recording with short waiting time.

According to a first aspect of the present invention, there is provided a magnetic recording/reproducing apparatus that reads the last data block that should be left in base, creates a new data block by connecting to-be-connected data in data-connection recording to the last part or later of valid data in the base data, and overwrites the last data block that should be left in base with the new data block to perform data-connection recording, comprising: a data storing section that stores data in the last data block that should be left in the base; a controller that controls reading/writing operations of data from/to the data storing section, wherein the controller performs data-connection recording by switching between controls according to first and second methods depending on the operation mode immediately before a record pause mode, the first method performing data-connection recording by reproducing, in the forward direction, the data in the last data block that should be left in the base at single speed with tracking being effected to write the last data block in the data storing section and reading out the last block data that should be left in the base from the data storing section, and the second method performing data-connection recording by reading out the last block data that should be left in the base and that is stored in the data storing section from the data storing section in a record mode.

According to a second aspect of the present invention, there is provided a magnetic recording/reproducing apparatus that reads the last data block that should be left in base, creates a new data block by connecting to-be-connected data in data-connection recording to the last part or later of valid data in the base data, and overwrites the last data block that should be left in base with the new data block to perform data-connection recording, comprising: a data storing section that stores data in the last data block that should be left in the base; a controller that controls reading/writing operations of data from/to the data storing section, wherein the controller performs data-connection recording by switching among controls according to first to third methods depending on the operation mode immediately before a record pause mode, the first method performing data-connection recording by reproducing, in the forward direction, the data in the last data block that should be left in the base at single speed with tracking being effected to write the last block data in the data storing section and reading out the last block data that should be left in the base from the data storing section, the second method performing data-connection recording by reading out the last block data that should be left in the base and that is stored in the data storing section from the data storing section in a record mode, and the third method performing data-connection recording by reproducing, in the forward or reverse direction, the last block data that should be left in the base at half speed or less by non-tracking method using double-density or more scan so as to write the last block data in the data storing section and reading out the last block data that should be left in the base from the data storing section.

According to a third aspect of the present invention, there is provided a magnetic recording/reproducing apparatus that reads the last data block that should be left in base, creates a new data block by connecting to-be-connected data in data-connection recording to the last part or later of valid data in the base data, and overwrites the last data block that should be left in base with the new data block to perform data-connection recording, comprising: a data storing section that stores data in the last data block that should be left in the base; a controller that controls reading/writing operations of data from/to the data storing section, wherein the controller performs data-connection recording by switching among controls according to first to third methods depending on the operation mode immediately before a record pause mode, the first method performing data-connection recording by reproducing, in the forward direction, the data in the last data block that should be left in the base at single speed with tracking being effected to write the last block data in the data storing section and reading out the last block data that should be left in the base from the data storing section, the second method performing data-connection recording by reading out the last block data that should be left in the base and that is stored in the data storing section from the data storing section in a record mode, and the third method performing data-connection recording by reproducing, in the forward direction, the last block data that should be left in the base at half speed or less by non-tracking method using double-density or more scan so as to write the last block data in the data storing section and reading out the last block data that should be left in the base from the data storing section.

According to a fourth aspect of the present invention, there is provided a magnetic recording/reproducing method that reads the last data block that should be left in base, creates a new data block by connecting to-be-connected data in data-connection recording to the last part or later of valid data in the base data, and overwrites the last data block that should be left in base with the new data block to perform data-connection recording, comprising the steps of: storing data in the last data block that should be left in the base in a data storing section; controlling reading/writing operations of data from/to the data storing section, wherein the control step performs data-connection recording by switching between controls according to first and second methods depending on the operation mode immediately before a record pause mode, the first method performing data-connection recording by reproducing, in the forward direction, the data in the last data block that should be left in the base at single speed with tracking being effected to write the last block data in the data storing section and reading out the last block data that should be left in the base from the data storing section, and the second method performing data-connection recording by reading out the last block data that should be left in the base and that is stored in the data storing section from the data storing section in a record mode.

According to a fifth aspect of the present invention, there is provided a magnetic recording/reproducing method that reads the last data block that should be left in base, creates a new data block by connecting to-be-connected data in data-connection recording to the last part or later of valid data in the base data, and overwrites the last data block that should be left in base with the new data block to perform data-connection recording, comprising the steps of: storing data in the last data block that should be left in the base in a data storing section; controlling reading/writing operations of data from/to the data storing section, wherein the control step performs data-connection recording by switching among controls according to first to third methods depending on the operation mode immediately before a record pause mode, the first method performing data-connection recording by reproducing, in the forward direction, the data in the last data block that should be left in the base at single speed with tracking being effected to write the last block data in the data storing section and reading out the last block data that should be left in the base from the data storing section, the second method performing data-connection recording by reading out the last block data that should be left in the base stored in the data storing section from the data storing section in a record mode, and the third method performing data-connection recording by reproducing, in the forward or reverse direction, the last block data that should be left in the base at half speed or less by non-tracking method using double-density or more scan so as to write the last block data in the data storing section and reading out the last block data that should be left in the base from the data storing section.

According to a sixth aspect of the present invention, there is provided a magnetic recording/reproducing method that reads the last data block that should be left in base, creates a new data block by connecting to-be-connected data in data-connection recording to the last part or later of valid data in the base data, and overwrites the last data block that should be left in base with the new data block to perform data-connection recording, comprising the steps of: storing data in the last block data that should be left in the base in a data storing section; controlling reading/writing operations of data from/to the data storing section, wherein the control step performs data-connection recording by switching among controls according to first to third methods depending on the operation mode immediately before a record pause mode, the first method performing data-connection recording by reproducing, in the forward direction, the data in the last data block that should be left in the base at single speed with tracking being effected to write the last block data in the data storing section and reading out the last block data that should be left in the base from the data storing section, the second method performing data-connection recording by reading out the last block data that should be left in the base and that is stored in the data storing section from the data storing section in a record mode, and the third method performing data-connection recording by reproducing, in the forward direction, the last block data that should be left in the base at half speed or less by non-tracking method using double-density or more scan so as to write the last block data in the data storing section and reading out the last block data that should be left in the base from the data storing section.

According to at least preferred embodiments of the present invention, the method of reading base data is changed depending on the operation mode immediately before a record pause (RECP) mode. As a result, it is possible to perform data-connection recording with short transition time while maintaining a high-quality image by write back operation.

Embodiments of the invention will now be described, by way of example only, with reference to the accompanying drawings in which:
FIG. 1 is a view schematically showing recording operation before data-connection recording when data-connection recording is performed in tape recording according to MPEG standard;
FIG. 2 is a view schematically showing data-connection recording in which a base is not written back, and recording is performed starting from the next error-corrected block of outer-codes;
FIG. 3 is a view schematically showing data-connection recording in which an error-corrected block including the last data is once read out and connected to data to be additionally recorded, and the integrated data is written back;
FIG. 4 is a block diagram showing a configuration of a magnetic recording/reproducing apparatus according to one example embodiment of the present invention;
FIG. 5 is a view schematically showing operational mode transition of the magnetic recording/reproducing apparatus;
FIG. 6 is a table schematically showing a relationship between the image to be connected and written back during data-connection operation and the operation mode immediately before RECP mode;
FIG. 7 is a view schematically showing data-connection recording performed with the operation modes of the magnetic recording/reproducing apparatus transited among a first record (REC) mode, record pause (RECP) mode and second record (REC2) mode in the order mentioned;
FIG. 8 is a view schematically showing data-connection recording performed with the operation modes of the magnetic recording/reproducing apparatus transited among a STOP mode, record pause (RECP) mode and record (REC) mode in the order mentioned;
FIG. 9 is a view schematically showing data-connection recording performed with the operation modes of the magnetic recording/reproducing apparatus transited among a reproduction pause (PBP) mode, record pause (RECP) and record (REC) mode in the order mentioned;
FIG. 10 is a table schematically showing a comparison of results of transition time in the case where various methods are used to store, in a memory, data to be connected and written back during data-connection recording when data-connection recording is performed in the magnetic recording/reproducing apparatus; and
FIG. 11 is a table schematically showing first to third control sequences employed in the magnetic recording/reproducing apparatus.

An example embodiment of the present invention will be described below in detail with reference to the accompanying drawings. It goes without saying that the present invention is not limited to the following embodiment, and various changes may be made without departing from the scope of the invention.

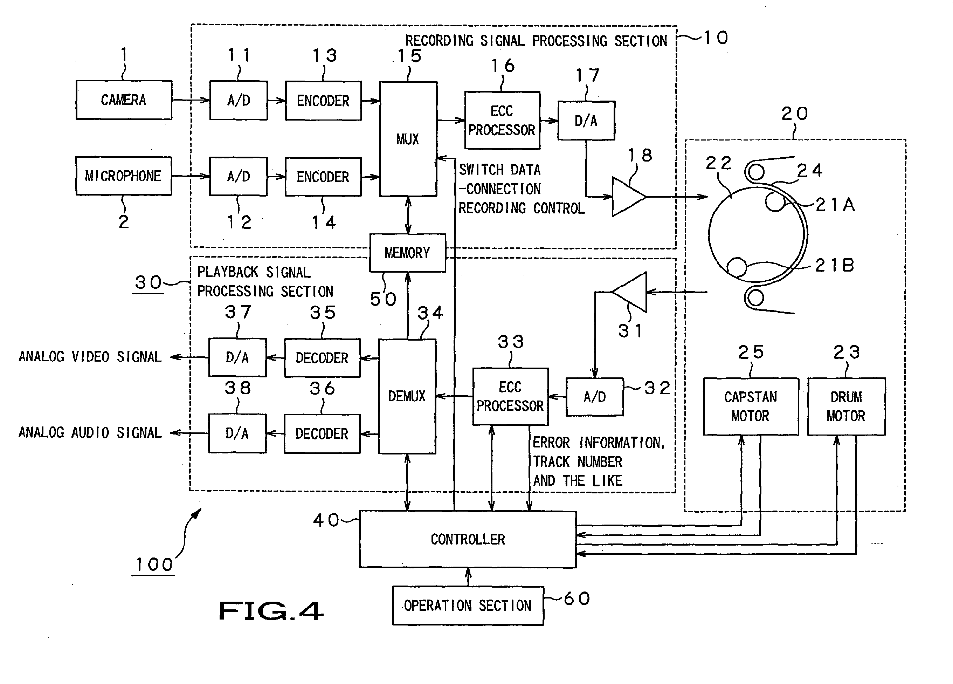

The present invention is applied to, for example, a magnetic recording/reproducing apparatus 100 having a configuration shown in FIG. 4.

The magnetic recording/reproducing apparatus 100 is a videotape recorder with a camera, and includes: a recording signal processing section 10 connected to a camera 1 and microphone 2; a recording/reproducing section 20 which receives a recording signal from the recording signal processing section 10; a reproduced signal processing section 30 which receives a reproduced signal from the recording/reproducing section 20; a controller 40 that controls the above components; a memory 50 connected to the recording signal processing section 10 and recording/reproducing section 20; and an operation section 60 connected to the controller 40.

The recording signal processing section 10 includes: analog to digital (A/D) converters 11 and 12 which receive an analog video signal and analog audio signal from the camera 1 and the microphone 2; encoders 13 and 14 which receive outputs of the A/D converters 11 and 12; a multiplexer (MUX) 15 which receives outputs of the encoders 13 and 14; an error correction coding (ECC) processor 16 which receives an output of the MUX 15; a digital to analog (D/A) converter 17 which receives an output of the ECC processor 16; a recording amplifier 18 which receives an output of the D/A converter and the like. The memory 50 is connected to the MUX 15. The MUX 15 operates under control of the controller 40.

In the recording signal processing section 10, the A/D converters 11 and 12 digitize an analog video signal and analog audio signal supplied from the camera 1 and the microphone 2. The encoders 13 and 14 encode the video and audio data that have been digitized by the A/D converters 11 and 12 according to the MPEG standard. The MUX 15 generates a data stream according to the MPEG standard from the encoded video and audio data that have been encoded by the encoders 13 and 14. The ECC processor 16 generates an error-correction code and adds it to the data stream generated by the MUX 15 by a predetermined error correction coding (ECC) block (for example, one ECC block includes eight tracks). The D/A converter 17 digital-to-analog- converts the data stream to which the error-correction code has been added by the ECC processor 16 to obtain a recording signal. The recording amplifier 18 amplifies the recording signal that has been analog-converted by the D/A converter 17 and supplies the recording/reproducing section 20 with the amplified signal.

The recording/reproducing section 20 includes: a rotating drum 22 provided with a pair of magnetic heads 21A and 21B having different azimuth angles, the heads 21A and 21B facing each other at an angle of 180°; a drum motor 23 that causes the rotating drum 22 to rotate; a capstan motor 25 that causes a magnetic tape 24 wound around the rotating drum 22 to run, and the like.

The drum motor 23 and the capstan motor 25 are controlled by the controller 40 with respect to the rotating direction and the rotating speed.

The pair of magnetic heads 21A and 21B scan a slant track on the magnetic tape 24 to record the recording signal supplied from the recording signal processing section 10 onto the recording track. Further, the pair of magnetic heads 21A and 21B scan a slant track on the magnetic tape 24 to obtain a reproduced signal, and supplies the reproduced signal processing section 30 with the obtained signal.

The reproduced signal processing section 30 includes: a reproduced signal amplifier 31 which receives a reproduced signal from the recording/reproducing section 20; an analog to digital (A/D) converter 32 which receives an output of the reproduced signal amplifier 31; an error correction coding (ECC) processor 33 which receives an output of the A/D converter 32; a demultiplexer (DEMUX) 34 which receives an output of the ECC processor 33; decoders 35 and 36 which receive an output of the DEMUX 34; digital to analog (D/A) converters 37 and 38 which receive outputs of the decoders 35 and 36, and the like. The memory 50 is connected to the DEMUX 34. The ECC processor 33 and the DEMUX 34 operate under control of the controller 40.

In the reproduced signal processing section 30, the reproduced signal amplifier 31 amplifies a reproduced signal supplied from the recording/reproducing section 20. The A/D converter 32 digitizes the reproduced signal that has been amplified by the reproduced signal amplifier 31 to generate a reproduced data stream. After applying error-correction to the reproduced data stream supplied from the A/D converter 32, the ECC processor 33 supplies the controller 40 with error information, track number information and the like, and at the same time, supplies the DEMUX 34 with the error-corrected reproduced data stream. The DEMUX 34 separates reproduced encoded video data and reproduced encoded audio data from the error-corrected reproduced data stream supplied from the ECC processor 33, and supplies the decoders 35 and 36 with the reproduced encoded video data and reproduced encoded audio data. When data-connection recording is performed, the DEMUX 34 separates write-back data from the error-corrected reproduced data stream supplied from the ECC processor 33 and supplies the memory 50 with the write-back data under control of the controller 40. The decoders 35 and 36 decode the reproduced encoded video data and reproduced encoded audio data that have been separated by the DEMUX 34 according to the MPEG standard to generate reproduced video data and reproduced audio data. The D/A converters 37 and 38 digital-to-analog-convert the reproduced video data and reproduced audio data that have been decoded by the decoders 35 and 36 and output a reproduced analog video signal and reproduced analog audio signal.

In the magnetic recording/reproducing apparatus 100 having the above configuration, the controller 40 stores, in the memory 50, data in the last part of the base that has been written into the magnetic tape 24 by recording/reproducing section 20 through the MUX 15 of the recording signal processing section 10 at the end of recording operation. Alternatively, the controller 40 stores, data in the last block of the base that has been obtained by reproduction of the magnetic tape 24 performed by the recording/reproducing section 20 through the DEMUX 34 of the reproduced signal processing section 30.

When data-connection recording is designated through the operation section 60, the controller 40 connects to-be-newly-recorded data to the last valid data in the last block of the base that has been stored in the memory 50 so as to perform new recording. The last valid data in the last block of the base is written back.

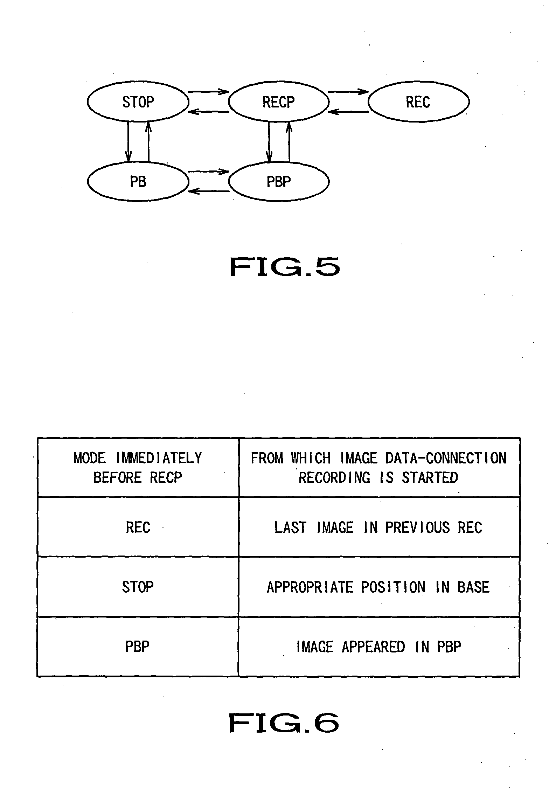

The magnetic recording/reproducing apparatus 100 operates in the following five modes: STOP mode, RECP (record pause) mode, REC (record) mode, PB (reproduction) mode, and PBP (reproduction pause) mode, and transits between the modes as shown in FIG. 5.

At data-connection recording time, the controller 40 in the magnetic recording/reproducing apparatus 100 operates as follows depending on the mode immediately before RECP mode. That is, as shown in FIG. 6, the controller 40 starts data-connection recording: with the last image of a previous record set as the image to be connected in the case where the mode immediately before RECP mode is REC mode; with an image in an appropriate position in the base set as the image to be connected in the case where the mode immediately before RECP mode is STOP mode; and with an image that has been appeared in PBP mode set as the image to be connected in the case where the mode immediately before RECP mode is PBP mode.

The following three methods are available in order to store the last image of a previous record as the image to be connected in the memory 50.

In a first method, the controller 40 allows the magnetic tape 24 to run in the forward direction at single speed so as to store, in the memory 50, data in the last block of the base, which is the last image of a previous record and used as the image to be connected through the DEMUX 34 of the reproduced signal processing section 30.

In a second method, the controller 40 stores, in the memory 50, data in the last block of the base, which is the last image of a previous record and used as the image to be connected through the MUX 15 of the recording signal processing section 10 during REC mode.

In a third method, the controller 40 allows the magnetic tape 24 to run in the forward or reverse direction at half speed to reproduce, by non-tracking method using double-density scan, data in the last block of the base, which is the last image of a previous record and used as the image to be connected and stores the data in the memory 50 through the DEMUX 34 of the reproduced signal processing section 30.

Next, an operation at the time of data-connection recording in the magnetic recording/reproducing apparatus 100 will be described.

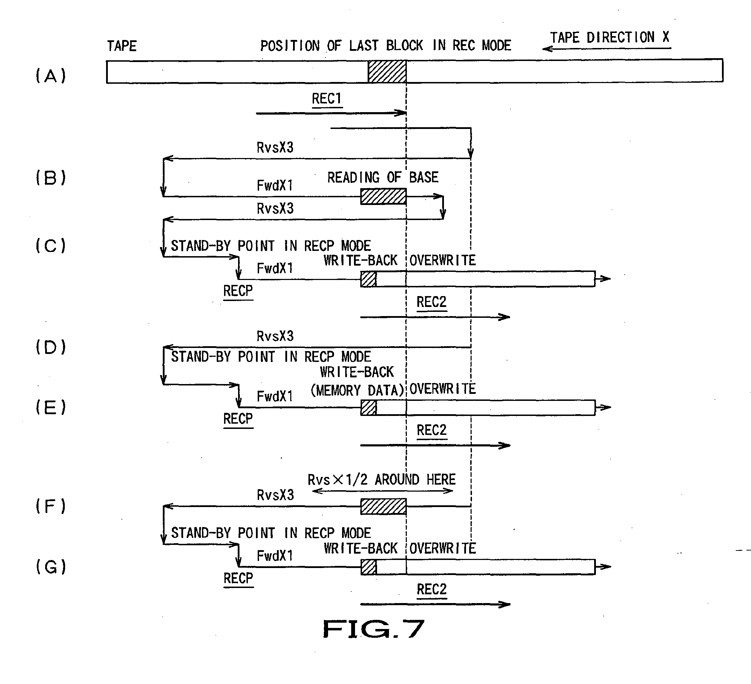

Firstly, with reference to FIG. 7, a description will be given of data-connection recording performed with the operation modes of the magnetic recording/reproducing apparatus 100 transited among a first record (REC1) mode, record pause (RECP) mode and second record (REC2) mode in the order mentioned.

As described above, when REC mode is the mode immediately before RECP mode, data-connection recording is started with the last image of a previous record set as the image to be connected. In this case, any of the aforementioned first to third methods can be used in order to store data corresponding to the last image of a previous record in the memory 50.

In the case of the first method, when receiving designation of RECP mode after recording of data in the last block of the base onto the magnetic tape 24 has been completed as shown in FIG. 7 (A), the controller 40 rewinds the magnetic tape 24 at triple speed, forwards the tape at single speed so as to store, in the memory 50, data in the last block of the base, which is the last image of a previous record and used as the image to be connected through the DEMUX 34 of the reproduced signal processing section 30, rewinds the magnetic tape 24 again at triple speed by a predetermined tape length, and then forwards the tape until a stand-by point of record pause (RECP) mode to set RECP mode, as shown in FIG. 7 (B).

When the start of REC 2 in RECP mode has been designated, as shown in FIG. 7 (C), the controller 40 forwards the magnetic tape 24 at single speed, then reads out data in the last block of the base from the memory 50 with the tracking aligned with the base during runup for reproduction until the start of data-connection recording, and writes back the read out data in the last block of the base onto the last block of the base, thereby starting data-connection recording from the last block of the base.

In the case of the second method, when receiving designation of RECP mode in the state where data in the last block of the base, which is the last image of a previous record and used as the image to be connected is stored in the memory 50 through the MUX 15 of the recording signal processing section 10 and the data in the last block of the base is recorded on the magnetic tape 24 in REC 1, the controller 40 rewinds the magnetic tape 24 at triple-speed by a predetermined tape length and then forwards the tape until a stand-by point of record pause (RECP) mode to set RECP mode, as shown in FIG. 7 (D).

When the start of REC 2 in RECP mode has been designated, as shown in FIG. 7 (E), the controller 40 forwards the magnetic tape 24 at single speed, then reads out data in the last block of the base from the memory 50 with the tracking aligned with the base during runup for reproduction until the start of data-connection recording, and writes back the read out data in the last block of the base onto the last block of the base, thereby starting data-connection recording from the last block of the base.

In the case where the third method is employed, when receiving designation of RECP mode after recording of data in the last block of the base onto the magnetic tape 24 has been completed as shown in FIG. 7 (A), the controller 40 rewinds the magnetic tape 24 at half speed to reproduce, by non-tracking method using double-density scan, data in the last block of the base, which is the last image of a previous record and used as the image to be connected, and stores the data in the memory 50 through the DEMUX 34 of the reproduced signal processing section 30 as shown in FIG. 7 (F). After that, the controller 40 rewinds the magnetic tape 24 at triple-speed by a predetermined tape length and forwards the tape until a stand-by point of record pause (RECP) mode to set RECP mode.

When the start of REC 2 in RECP mode has been designated, as shown in FIG. 7 (G), the controller 40 forwards the magnetic tape 24 at single speed, then reads out data in the last block of the base from the memory 50 with the tracking aligned with the base during runup for reproduction until the start of data-connection recording, and writes back the read out data in the last block of the base onto the last block of the base, thereby starting data-connection recording from the last block of the base.

The second or third method can shorten waiting time more than the first method.

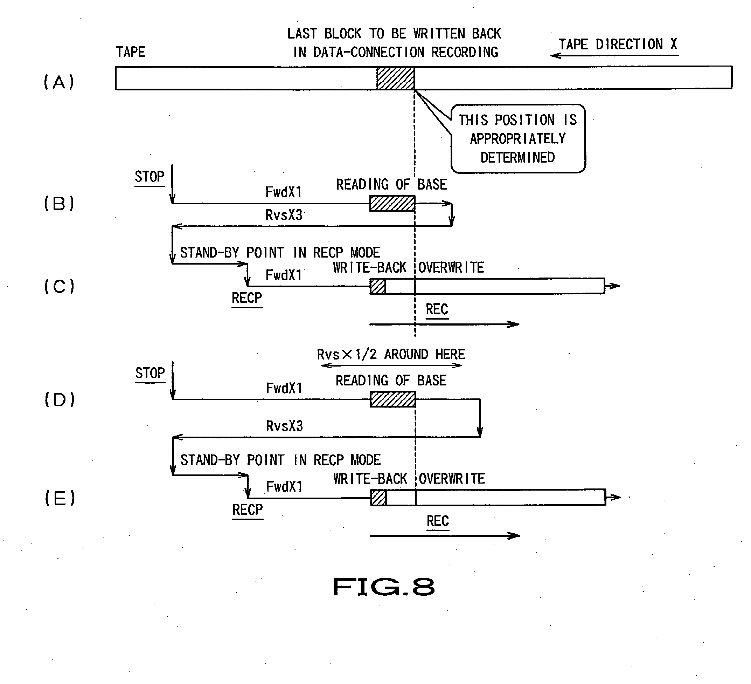

Next, a description will be given of data-connection recording performed with the operation modes of the magnetic recording/reproducing apparatus 100 transited among STOP mode, RECP mode and REC mode in the order mentioned, with reference to FIG. 8.

As described above, when REC mode is the mode immediately before RECP mode, data-connection recording is started with the last image of a previous record set as the image to be connected. In this case, any of the aforementioned first to third methods can be used in order to store data corresponding to the last image of a previous record in the memory 50.

When STOP mode is the mode immediately before RECP mode, data-connection recording is started with an image in an appropriate position in the base set as the image to be connected. In this case, the aforementioned first or third method can be used in order to store data corresponding to the last image of a previous record in the memory 50.

That is, in the case where the first method is applied, when receiving designation of RECP mode in STOP mode as shown in FIG. 8 (A), the controller 40 forwards the magnetic tape 24 at single speed so as to store, in the memory 50, data in the last block of the base, which is the last image of a previous record and used as the image to be connected through the DEMUX 34 of the reproduced signal processing section 30 as shown in FIG. 8 (B). After that, the controller 40 rewinds the magnetic tape 24 at triple speed by a predetermined tape length and then forwards the tape until a stand-by point in RECP mode to set RECP mode.

When the start of REC in RECP mode has been designated, as shown in FIG. 8 (C), the controller 40 forwards the magnetic tape 24 at single speed, then reads out data in the last block of the base from the memory 50 with the tracking aligned with the base during runup for reproduction until the start of data-connection recording, and writes back the read out data in the last block of the base onto the last block of the base, thereby starting data-connection recording from the last block of the base.

In the case where the third method is employed, when receiving designation of RECP mode in STOP mode as shown in FIG. 8 (A), the controller 40 forwards the magnetic tape 24 at half speed to reproduce, by non-tracking method using double-density scan, data in the last block of the base, which is the last image of a previous record and used as the image to be connected, and stores the data in the memory 50 through the DEMUX 34 of the reproduced signal processing section 30 as shown in FIG. 8 (D). After that, the controller 40 rewinds the magnetic tape 24 at triple speed by a predetermined tape length and forwards the tape until a stand-by point of record pause (RECP) mode to set RECP mode.

When the start of the second record (REC 2) in record pause (RECP) mode has been designated, as shown in FIG. 8 (E), the controller 40 forwards the magnetic tape 24 at single speed, then reads out data in the last block of the base from the memory 50 with the tracking aligned with the base during runup for reproduction until the start of data-connection recording, and writes back the read out data in the last block of the base onto the last block of the base, thereby starting data-connection recording from the last block of the base.

In this case, the first and second methods have substantially the same waiting time.

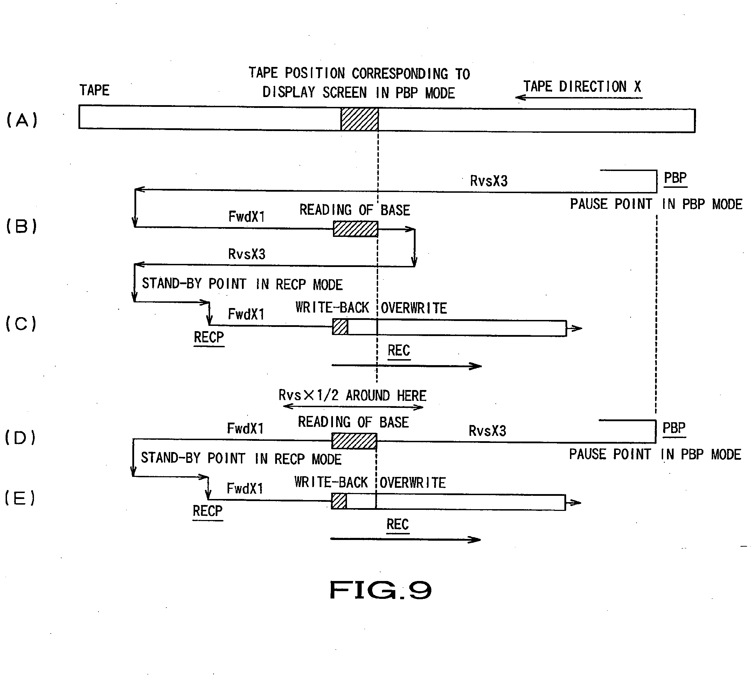

Next, a description will be given of data-connection recording performed with the operation modes of the magnetic recording/reproducing apparatus 100 transited among PBP mode, RECP mode and REC mode in the order mentioned, with reference to FIG. 9.

It is assumed that base data corresponding to reproduction stand-by image is not left in the memory 50 for storing the last block at the pause point in PBP mode and when PBP mode is the mode immediately before RECP mode, an image that has been appeared in PBP mode is stored in the memory 50 as the image to be connected as described above. In this case, the aforementioned first or third method can be used in order to store, in the memory 50, an image that has been appeared in PBP mode as the last image of a previous record, that is, the image to be connected.

That is, in the case where the first method is applied, when receiving the designation of RECP mode in PBP mode as shown in FIG. 9 (A), the controller 40 allows the magnetic tape 24 to run in the reverse direction at triple speed for rewind, and then forwards the tape at single speed so as to store, in the memory 50, data in the last block of the base, which is the last image of a previous record and used as the image to be connected through the DEMUX 34 of the reproduced signal processing section 30 as shown in FIG. 9 (B). After that, the controller 40 rewinds the magnetic tape 24 at triple speed by a predetermined tape length and then forwards the tape until a stand-by point in RECP mode to set RECP mode.

When the start of REC in RECP mode has been designated, as shown in FIG. 9 (C), the controller 40 forwards the magnetic tape 24 at single speed, then reads out data in the last block of the base from the memory 50 with the tracking aligned with the base during runup for reproduction until the start of data-connection recording, and writes back the read out data in the last block of the base onto the last block of the base, thereby starting data-connection recording from the last block of the base.

In the case where the third method is employed, when receiving the designation of RECP mode in PBP mode as shown in FIG. 9 (A), the controller 40 allows the magnetic tape 24 to run in the reverse direction at triple speed for rewind, and during the rewind, reproduces at half speed by non-tracking method using double-density scan, data in the last block of the base, which is the last image of a previous record and used as the image to be connected so as to store the data in the memory 50 through the DEMUX 34 of the reproduced signal processing section 30 as shown in FIG. 9 (D). After that, the controller 40 rewinds the magnetic tape 24 at triple speed by a predetermined tape length and forwards the tape until a stand-by point of RECP mode to set RECP mode.

When the start of REC in RECP mode has been designated, as shown in FIG. 9 (E), the controller 40 forwards the magnetic tape 24 at single speed, then reads out data in the last block of the base from the memory 50 with the tracking aligned with the base during runup for reproduction until the start of data-connection recording, and writes back the read out data in the last block of the base onto the last block of the base, thereby starting data-connection recording from the last block of the base.

In this case, the waiting time in the second method is shorter than that in the first method.

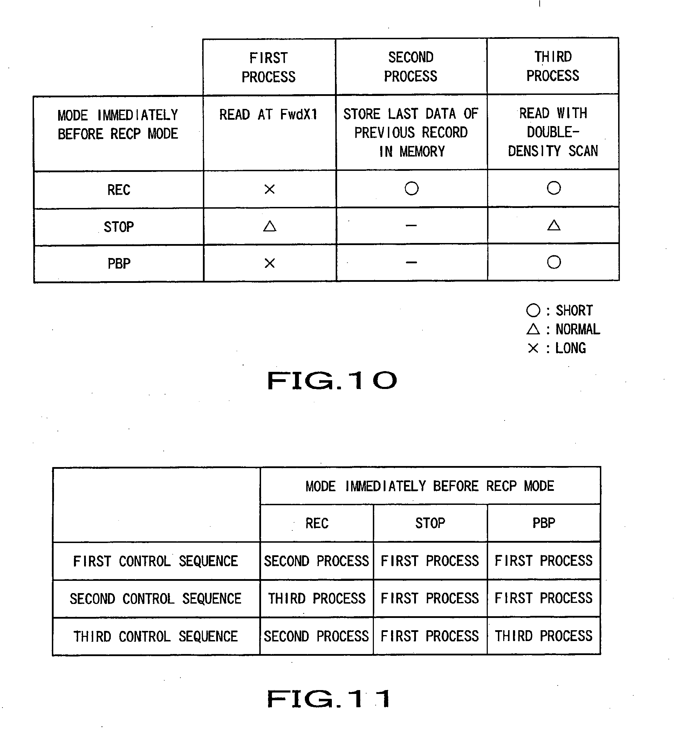

FIG. 10 shows a comparison of results of transition time that differ among the above methods in data-connection recording performed in the magnetic recording/reproducing apparatus 100.

In the case where the second method in which data in the last block of the base, which is the last image of a previous record and used as the image to be connected is stored in the memory 50 through the MUX 15 of the recording signal processing section 10 in record (REC) mode, or the third method in which the magnetic tape 24 is allowed to run in the forward or reverse direction at half speed to reproduce, by non-tracking method using double-density scan, data in the last block of the base, which is the last image of a previous record and used as the image to be connected, so as to store the data in the memory 50 through the DEMUX 34 of the reproduced signal processing section 30 is employed, transition time in a certain mode becomes shorter than in the case of employing the first method in which the magnetic tape 24 is allowed to run in the forward direction at single speed so as to store, in the memory 50, data in the last block of the base, which is the last image of a previous record and used as the image to be connected through the DEMUX 34 of the reproduced signal processing section 30.

Therefore, the controller 40 of the magnetic recording/reproducing apparatus 100 performs data-connection recording according, for example, to any of first to third control sequences shown in a table of FIG. 11.

In the case of a first control sequence, the controller 40 operates as follows. That is, the controller 40 performs data-connection recording by reading base data into the memory 50: according to the second method when REC mode is the mode immediately before RECP mode; according to the first method when STOP mode is the mode immediately before RECP mode; and according to the first method when PBP mode is the mode immediately before RECP mode.

In the case of a second control sequence, the controller 40 performs data-connection recording by reading base data into the memory 50: according to the third method when REC mode is the mode immediately before RECP mode; according to the first method when STOP mode is the mode immediately before RECP mode; and according to the first method when PBP mode is the mode immediately before RECP mode.

In the case of a third control sequence, the controller 40 performs data-connection recording by reading base data into the memory 50: according to the second method when REC mode is the mode immediately before RECP mode; according to the first method when STOP mode is the mode immediately before RECP mode; and according to the third method when PBP mode is the mode immediately before RECP mode.

The magnetic recording/reproducing apparatus 100 can perform data-connection recording with short transition time while maintaining a high-quality image by write back operation by selectively employing any of the above first to third control sequences.

In the present embodiment, the number of modes is reduced or specification at the time of data-connecting is simplified in order to make descriptions understandable, for example, a data in an appropriate position is set as the image to be connected in the specification through STOP mode in FIG. 6.

## Claims

1. A magnetic recording/reproducing apparatus that reads the last data block that should be left in base, creates a new data block by connecting to-be-connected data in data-connection recording to the last part or later of valid data in the base data, and overwrites the last data block that should be left in base with the new data block to perform data-connection recording, comprising:
a data storing section that stores data in the last data block that should be left in the base;
a controller that controls reading/writing operations of data from/to the data storing section, wherein
the controller performs data-connection recording by switching between controls according to first and second methods depending on the operation mode immediately before a record pause mode,
the first method performing data-connection recording by reproducing, in the forward direction, the data in the last data block that should be left in the base at single speed with tracking being effected to write the last block data in the data storing section and reading out the last block data that should be left in the base from the data storing section, and
the second method performing data-connection recording by reading out the last block data that should be left in the base and that is stored in the data storing section from the data storing section in a record mode.

2. The magnetic recording/reproducing apparatus according to claim 1,
wherein
the controller performs data-connection recording according to the first method when a stop mode is the mode immediately before a record pause mode, and
the controller performs data-connection recording according to the second method when a record mode is the mode immediately before a record pause mode.

3. A magnetic recording/reproducing apparatus that reads the last data block that should be left in base, creates a new data block by connecting to-be-connected data in data-connection recording to the last part or later of valid data in the base data, and overwrites the last data block that should be left in base with the new data block to perform data-connection recording, comprising:
a data storing section that stores data in the last data block that should be left in the base;
a controller that controls reading/writing operations of data from/to the data storing section, wherein
the controller performs data-connection recording by switching among controls according to first to third methods depending on the operation mode immediately before a record pause mode,
the first method performing data-connection recording by reproducing, in the forward direction, the data in the last data block that should be left in the base at single speed with tracking being effected to write the last block data in the data storing section and reading out the last block data that should be left in the base from the data storing section,
the second method performing data-connection recording by reading out the last block data that should be left in the base and that is stored in the data storing section from the data storing section in a record mode, and
the third method performing data-connection recording by reproducing, in the forward or reverse direction, the last block data that should be left in the base at half speed or less by non-tracking process using double-density or more scan so as to write the last block data in the data storing section and reading out the last block data that should be left in the base from the data storing section.

4. The magnetic recording/reproducing apparatus according to claim 3,
wherein
the controller performs data-connection recording according to the first method when a stop mode is the mode immediately before a record pause mode, and
the controller performs data-connection recording according to the third method when a record mode is the mode immediately before a record pause mode.

5. A magnetic recording/reproducing apparatus that reads the last data block that should be left in base, creates a new data block by connecting to-be-connected data in data-connection recording to the last part or later of valid data in the base data, and overwrites the last data block that should be left in base with the new data block to perform data-connection recording, comprising:
a data storing section that stores data in the last data block that should be left in the base;
a controller that controls reading/writing operations of data from/to the data storing section, wherein
the controller performs data-connection recording by switching among controls according to first to third methods depending on the operation mode immediately before a record pause mode,
the first method performing data-connection recording by reproducing, in the forward direction, the data in the last data block that should be left in the base at single speed with tracking being effected to write the last block data in the data storing section and reading out the last block data that should be left in the base from the data storing section,
the second method performing data-connection recording by reading out the last block data that should be left in the base and that is stored in the data storing section from the data storing section in a record mode, and
the third method performing data-connection recording by reproducing, in the forward direction, the last block data that should be left in the base at half speed or less by non-tracking system using double-density or more scan so as to write the last block data in the data storing section and reading out the last block data that should be left in the base from the data storing section.

6. The magnetic recording/reproducing apparatus according to claim 5,
wherein
the controller performs data-connection recording according to the first method when a stop mode is the mode immediately before a record pause mode,
the controller performs data-connection recording according to the second method when a record mode is the mode immediately before a record pause mode, and
the controller performs data-connection recording according to the third method when a reproduction pause mode is the mode immediately before a record pause mode.

7. A magnetic recording/reproducing method that reads the last data block that should be left in base, creates a new data block by connecting to-be-connected data in data-connection recording to the last part or later of valid data in the base data, and overwrites the last data block that should be left in base with the new data block to perform data-connection recording, comprising the steps of:
storing data in the last data block that should be left in the base in a data storing section;
controlling reading/writing operations of data from/to the data storing section, wherein
the control step performs data-connection recording by switching between controls according to first and second methods depending on the operation mode immediately before a record pause mode,
the first method performing data-connection recording by reproducing, in the forward direction, the data in the last data block that should be left in the base at single-speed with tracking being effected to write the last block data in the data storing section and reading out the last block data that should be left in the base from the data storing section, and
the second method performing data-connection recording by reading out the last block data that should be left in the base and that is stored in the data storing section from the data storing section in a record mode.

8. A magnetic recording/reproducing method that reads the last data block that should be left in base, creates a new data block by connecting to-be-connected data in data-connection recording to the last part or later of valid data in the base data, and overwrites the last data block that should be left in base with the new data block to perform data-connection recording, comprising the steps of:
storing data in the last data block that should be left in the base in a data storing section;
controlling reading/writing operations of data from/to the data storing section, wherein
the control step performs data-connection recording by switching among controls according to first to third methods depending on the operation mode immediately before a record pause mode,
the first method performing data-connection recording by reproducing, in the forward direction, the data in the last data block that should be left in the base at single speed with tracking being effected to write the last block data in the data storing section and reading out the last block data that should be left in the base from the data storing section,
the second method performing data-connection recording by reading out the last block data that should be left in the base and that is stored in the data storing section from the data storing section in a record mode, and
the third method performing data-connection recording by reproducing, in the forward or reverse direction, the last block data that should be left in the base at half speed or less by non-tracking system using double-density or more scan so as to write the last block data in the data storing section and reading out the last block data that should be left in the base from the data storing section.

9. A magnetic recording/reproducing method that reads the last data block that should be left in base, creates a new data block by connecting to-be-connected data in data-connection recording to the last part or later of valid data in the base data, and overwrites the last data block that should be left in base with the new data block to perform data-connection recording, comprising the steps of:
storing data in the last data block that should be left in the base in a data storing section;
controlling reading/writing operations of data from/to the data storing section, wherein
the control step performs data-connection recording by switching among controls according to first to third methods depending on the operation mode immediately before a record pause mode,
the first method performing data-connection recording by reproducing, in the forward direction, the data in the last data block that should be left in the base at single speed with tracking being effected to write the last block data in the data storing section and reading out the last block data that should be left in the base from the data storing section,
the second method performing data-connection recording by reading out the last block data that should be left in the base and that is stored in the data storing section from the data storing section in a record mode, and
the third method performing data-connection recording by reproducing, in the forward direction, the last block data that should be left in the base at half speed or less by non-tracking process using double-density or more scan so as to write the last block data in the data storing section and reading out the last block data that should be left in the base from the data storing section.
